# EUROPEAN PATENT SPECIFICATION

(11) **EP 2 900 495 B1**
(45) Date of publication and mention of the grant of the patent: **24.06.2020**
(21) Application number: 13766534.5
(22) Date of filing: 25.09.2013
(51) Int. Cl.: B60G 17/04, F04B 11/00, F04B 39/00

(54) **NOISE SUPPRESSOR FOR VEHICLE SUSPENSION SYSTEM**
EINRICHTUNG ZUR GERÄUSCHVERMINDERUNG IN EINER KRAFTFAHRZEUGAUFHÄNGUNG
SYSTÈME D'ATTÉNUATION DU BRUIT DANS UNE SUSPENSION

(30) Priority: 25.09.2012 GB 201217110; 25.09.2012 GB 201217117
(43) Date of publication of application: 05.08.2015
(73) Proprietor: Jaguar Land Rover Limited, Coventry, Warwickshire CV3 4LF (GB)
(72) Inventor: JOYCE, Joseph, Whitley Coventry Warwickshire CV3 4LF (GB); SPURDEN, Bryan, Whitley Coventry Warwickshire CV3 4LF (GB); HAWKINS, Peter, Whitley Coventry Warwickshire CV3 4LF (GB); DUNKLEY, Jordan, Whitley Coventry Warwickshire CV3 4LF (GB)
(74) Representative: Holmes, Matthew William
(86) International application number: PCT/EP2013/069943
(87) International publication number: WO 2014/048975

(56) References cited:
- CN-Y- 2 913 669
- US-A- 3 687 224
- US-A- 4 285 534
- US-A- 4 969 536
- US-A1- 2003 080 481

## Description

### TECHNICAL FIELD

The present invention relates to a noise suppressor for a vehicle suspension system and particularly, but not exclusively, to a noise suppressor for an air compressor of a vehicle suspension system and a method of suppressing noise generated by a compressor for a vehicle suspension system. Aspects of the invention relate to a compressor system, to a suspension system, to a vehicle and to a method.

### BACKGROUND

It is known to provide a vehicle with a suspension system to couple the wheels of the vehicle to the vehicle body or chassis. In some vehicle applications, it is desirable to provide suspension systems which can adjust the ride height, the distance between the vehicle body and the ground, of the vehicle. In particular this is advantageous in vehicles intended for use off-road (off-road vehicle, four-wheel drive, four-by-four or sport utility vehicle (SUV)) such vehicles have increased ride heights in order to improve ground clearance when in use off-road. In order to facilitate entry to and exit from the vehicle the suspension system may lower the vehicle body with respect to the ground level; depending upon the environment in which the vehicle is being used it may be desirable or necessary to raise the vehicle body prior to moving off.

In other vehicle applications, is desirable to provide suspension systems which can be employed for levelling the vehicle in the event of a mass change (for example, users getting into or out of the vehicle, luggage being removed or added).

Vehicle suspension systems comprising pneumatic springs or air springs are known, these pneumatic springs employ a bellows or bladder which is inflated and deflated to raise and lower the height of the vehicle or level the vehicle.

In order to inflate the bellows a compressor is coupled to the pneumatic spring by an air-line. In some vehicle applications, it may be desirable, particularly in off-road vehicles, to mount the compressor, air-lines, reservoir or tank and other components such as valves within the vehicle body (for example the compressor the may be mounted within a cargo or load space; pipes or air-lines may be routed through the cargo or load space and the passenger cabin to couple the compressor to the pneumatic springs at each wheel of the vehicle) whereby reducing the risks of damage to these components for example when travelling over uneven ground or loose surfaces.

It is desirable to minimise the audible noise within the vehicle passenger cabin, it is therefore desirable to suppress noise generated by the vehicle suspension system, such as the noise generated by an air compressor. The perception of audible noise may be particularly acute in vehicles having a body style which includes a shared passenger/cargo volume, for example estate or station wagon, or SUV since the compressor and associated components may be in the same volume as the passengers. Due to the audible noise associated with the compressor, many vehicles fitted with air suspension systems are forced to compromise on component location in order to manage the interior sound quality as perceived by the occupants of the vehicle.

It is also known to provide air compressors on vehicles for the purpose of tyre inflation for one or more of the road wheels of the vehicle. Such system are known as Central Tyre Inflation System (CTIS). It is envisaged that the present invention may find application in such systems.

US 2003/080481 is directed to an air supply apparatus for a vehicle having pneumatic equipment such as air springs. The air supply apparatus includes a compressor and a muffler. The muffler is provided at a port of the air supply apparatus that functions as both the intake and discharge port of the system.

The present invention seeks to provide an improvement in the field of air compressors and has particular application for vehicles. The invention may be utilised in applications other than for vehicles. For example it is foreseen that the invention may have application in other domestic or industrial applications.

### SUMMARY OF THE INVENTION

Aspects of the invention provide a compressor system, a suspension system, a vehicle and a method as claimed in the appended claims.

According to one aspect of the invention for which protection is sought, there is provided a compressor system for a vehicle, the compressor comprising a piston mounted within a cylinder, the cylinder having an inlet for receiving a fluid and an outlet coupleable to an outlet pipe for transfer of a compressed fluid the compressor comprising a drive mechanism for actuating the piston, the outlet of the cylinder being coupled to a noise suppressor for suppressing acoustic noise from being transmitted through the outlet pipe, wherein the noise suppressor is spaced from the compressor, the outlet of the cylinder being coupled to an inlet of the noise suppressor by the outlet pipe, wherein the noise suppressor is integrally formed with the outlet pipe.

Optionally, the noise suppressor forms part of a fluid path of the compressed fluid.

According to another aspect of the invention for which protection is sought, there is provided a suspension system for a vehicle comprising a pneumatic actuator for adjusting the ride height of a vehicle, the pneumatic actuator being coupled to a compressor for compressing air to actuate the pneumatic actuator, the pneumatic actuator being coupled to an output of the compressor by a conduit for transferring compressed air and forming a pressurised path between the compressor and the pneumatic actuator and wherein the system comprises a noise suppressor for reducing acoustic noise radiated from the conduit, the noise suppressor being disposed in the pressurised path, wherein the noise suppressor is spaced from the compressor, the output of the compressor being coupled to an inlet aperture of the noise suppressor by a first portion of the conduit, wherein the noise suppressor is integrally formed with the first portion of the conduit.

In some embodiments, the noise suppressor is a reactive or reflective silencer.

Optionally, the noise suppressor comprises an expansion chamber.

The expansion chamber may comprise a cylindrical tube having first and second end walls, the first and second end walls each comprising an aperture, the aperture in the first end wall may form the inlet aperture and the aperture in the second end wall may form an outlet aperture.

In some embodiments the outlet aperture of the expansion chamber is coupled to the pneumatic actuator by a second pipe.

Optionally, the suspension system comprises a plurality of pneumatic actuators each coupled to the compressor by one or more valves.

The suspension system may comprise a pneumatic actuator coupling at least one road wheel of a vehicle to a body or chassis of the vehicle.

Optionally, the compressor is mounted within a volume defined by a vehicle body and wherein the conduit is disposed at least in part within the volume.

In some embodiments, the volume includes a passenger cabin of a vehicle.

The conduit may be disposed at least in part within a passenger cabin of a vehicle.

In some embodiments, the compressor is mounted within a housing and the noise suppressor is disposed within the housing.

In other embodiments, the compressor is mounted within a housing and the noise suppressor is mounted externally of the housing.

Optionally, the compressor is mounted within a cargo space of a vehicle.

In some embodiments, the compressor is mounted within a housing, the housing being disposed in a recess for receiving a spare road wheel of the vehicle.

Optionally, the housing is shaped so as to be accommodated within a recess arranged to further accommodate a spare road wheel of the vehicle.

According to a further aspect of the invention for which protection is sought, there is provided a vehicle comprising the compressor system or the suspension system as described in the foregoing paragraphs.

A method of reducing the noise radiated from a conduit disposed within a vehicle body is disclosed, the method comprising;
providing a conduit between a compressor and a pneumatic actuator, wherein the pneumatic actuator is configured to adjust the ride height of a vehicle;
pumping a pressurised fluid within the conduit; and
attenuating acoustic noise from being transmitted through the conduit with a noise suppressor;
whereby reducing the acoustic noise radiated into the vehicle body from the conduit.

According to an even further aspect of the invention for which protection is sought, there is provided a compressor system for a vehicle the compressor comprising a piston mounted within a cylinder, the cylinder having an inlet for receiving a fluid and an outlet coupleable to an outlet pipe for transfer of a compressed fluid, the compressor comprising a drive mechanism for actuating the piston, the outlet of the cylinder being coupled to a suppressor for suppressing pressure variations in the compressed fluid from being transmitted downstream of the suppressor.

Within the scope of this application it is expressly envisaged that the various aspects, embodiments, examples and alternatives set out in the preceding paragraphs, in the claims and/or in the following description and drawings, and in particular the individual features thereof, may be taken independently or in any combination. Features described in connection with one embodiment are applicable to all embodiments, unless such features are incompatible.

### BRIEF DESCRIPTION OF THE DRAWINGS

One or more embodiments of the invention will now be described, by way of example only, with reference to the accompanying drawings, in which:
FIGURE 1 is a plan view of a vehicle comprising an air suspension system according to an embodiment of the invention;
FIGURE 2 is a perspective view of a portion the air suspension system of Figure 1 in which a top cover has been removed for illustrative purposes;
FIGURE 3 is a cross sectional view of a noise suppressor according to an embodiment of the invention;
FIGURE 4 is a perspective view of the portion of the air suspension system of Figure 2 in which a top cover is shown;
FIGURE 5 is a graph showing a simulation of attenuation against frequency for a noise suppressor in the form of a cylindrical expansion silencer having an internal diameter of 50mm, length of 50mm and concentric inlet and outlet apertures of internal diameter 5.5mm; and
FIGURE 6 is a graph showing a comparison between a measurement of radiated noise against frequency in a vehicle cabin with and without a noise suppressor in the form of a cylindrical expansion silencer constructed from Aluminium and having an internal diameter of 50mm, length of 50mm and concentric inlet and outlet apertures of internal diameter 5.5mm.

### DETAILED DESCRIPTION

Detailed descriptions of specific embodiments of the noise suppressor, vehicle suspension system and method of the present invention are disclosed herein. It will be understood that the disclosed embodiments are merely examples of the way in which certain aspects of the invention can be implemented and do not represent an exhaustive list of all of the ways the invention may be embodied. Indeed, it will be understood that the noise suppressor, vehicle suspension system and method described herein may be embodied in various and alternative forms. The figures are not necessarily to scale and some features may be exaggerated or minimised to show details of particular components. Well-known components, materials or methods are not necessarily described in great detail in order to avoid obscuring the present disclosure. Any specific structural and functional details disclosed herein are not to be interpreted as limiting, but merely as a basis for the claims and as a representative basis for teaching one skilled in the art to variously employ the invention.

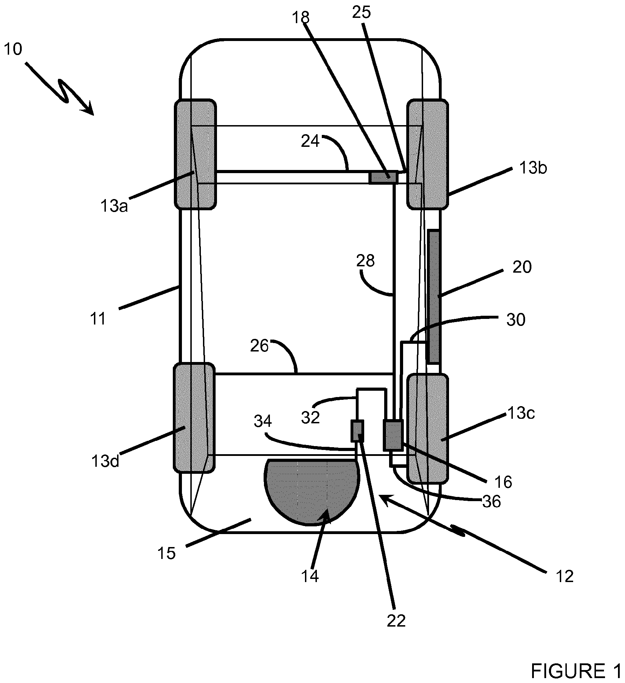

Referring to Figure 1 there is shown a vehicle 10 comprising a vehicle body 11 mounted on four road wheels 13a, 13b, 13c, 13d. The vehicle 10 comprises two pairs of wheels 13a/13b, 13c/13d, a pair of front road wheels 13a, 13b and a pair of rear road wheels 13c, 13d; it is envisaged that one or both pairs of wheels may be coupled to a drive system not shown, for example a combustion engine and/or electric motor. Each road wheel 13a, 13b, 13c, 13d is coupled to the vehicle body 11 by a suspension means (not shown) in the form of a pneumatic spring or actuator. The suspension means forms part of a suspension system 12.

The suspension system 12 includes a fluid compression means 14 in the form of an air compressor. The fluid compression means 14 is coupled to the suspension means of each road wheel 13a, 13b, 13c, 13d by connection means 24, 26, 28, 30, 32, 34, 36 in the form of air lines or pipes. The connection means 24, 26, 28, 30, 32, 34, 36 provide conduits for transferring pressurised air, typically at high pressure, optionally between about 700 kPa to about 3000 kPa (7 to 30 Bar), alternatively between about 700 kPa to about 1000 kPa (7 to 10 Bar) in other embodiments between about 900 kPa to about 1400 kPa (9 to 14 bar). In other embodiments other pressure ranges are useful.

Optionally, the suspension system 12 comprises a storage means 20 in the form of a reservoir or storage tank for storing compressed air. The storage means 20 can be employed to rapidly raise the height of the vehicle body 11 above the ground level, for example when moving the vehicle body 11 from a low ride height (in which the vehicle body 11 is lowered with respect to the ground level for facilitating easy entry to/exit from the vehicle 10) to an operative ride height in which the vehicle 10 is driven. This has the advantage of reducing the delay before the vehicle 10 can be operated.

In some embodiments the suspension system may be employed solely for the purpose of levelling the vehicle 10, for example on sedans or saloon cars or other vehicle types intended primarily for use on even road surfaces. In such applications the storage means 20 may be omitted. In these embodiments the suspension system 12 may not be provided with a system in which the driver can demand changes in the ride height, there is therefore less need for a reservoir 20. Omitting the reservoir 20 reduces the packaging space required by the suspension system 12, reduces weight and costs. In the absence of a reservoir 20 the compressor 14 may need to be operated at lower road speeds than would otherwise be necessary; at lower road speeds there will be less road noise and/or engine noise and thus there will be a greater requirement to suppress audible noise from the compressor 14.

It will be appreciated that need to suppress audible noise from the compressor 14 may be even greater in fully electric or hybrid electric vehicles employing a electric propulsion means such as an electric motor to propel the vehicle.

The suspension system 12 comprises direction means in the form of a first, rear, valve block 16 and a second, front, valve block 18. The first and second valve blocks 16, 18 comprise one or more valves for directing air from the compressor 14 to the other components such as the pneumatic springs or reservoir 20 of the suspension system 12; additionally, the valve blocks 16, 18 may be employed to direct air from the pneumatic springs or reservoir 20 or other components back to the compressor 14.

In the illustrated embodiment the compressor 14 is located within a cargo space 15, at the rear of the vehicle 10; in other embodiments the compressor 14 may be disposed in other locations within the vehicle body 11. The pipes 24, 26, 28, 30, 32, 34, 36 are disposed, at least in part, within the vehicle body 11, portions of the pipes 24, 26, 28, 30, 32, 34, 36 pass through a passenger cabin formed at least in part by the vehicle body 11. It is envisaged that the pipes 24, 26, 28, 30, 32, 34, 36 may be constructed from nylon tube or other suitable material capable of withstanding the pressure values generated by the compressor 14.

It has been found that, when locating the compressor 14 and the pipework 24, 26, 28, 30, 32, 34, 36 within the vehicle body 11, the compressor 14 and pipework 24, 26, 28, 30, 32, 34, 36 generate audible noise within the cabin. In particular the pipework 24, 26, 28, 30, 32, 34, 36 disposed within the vehicle body 11 has been found to radiate noise into the vehicle body 11; this is particularly undesirable in the volume of the vehicle body 11 which includes the passenger cabin. It has been found that this audible noise is caused by pressure pulsations created by the piston of the compressor 14. The noise comprises a fundamental frequency, which is dependent upon the frequency of operation of the piston, and harmonics of the fundamental frequency.

This audible or acoustic noise is a consequence of pressure pulsations or variations of the pressure of the fluid (such as air) being transmitted in the pipework 24, 26, 28, 30, 32, 34, 36. The pressure variations cause the walls of the pipework 24, 26, 28, 30, 32, 34, 36 to vibrate; the vibrations of the walls of the pipework 24, 26, 28, 30, 32, 34, 36 are radiated as acoustic noise from the pipework 24, 26, 28, 30, 32, 34, 36 into the vehicle body 11. The pressure pulsations are a consequence of the reciprocal motion of the piston of the compressor 14. The frequency of the pressure pulsations is a feature of the speed of operation or pumping frequency of the piston of the compressor 14. The pressure pulsations have a fundamental frequency which correlates to the pumping frequency.

In some embodiments the pressure pulsations may give rise to acoustic noise or energy being transmitted from the pipework 24, 26, 28, 30, 32, 34, 36 into the structure of the vehicle body 11 by conduction as structure borne noise, for example at the locations where the pipework 24, 26, 28, 30, 32, 34, 36 is fixed to the vehicle body 11.

The suspension system 12 comprises a noise suppression means 22 in the form of a silencer or suppressor. The silencer 12 is an expansion type silencer including an expansion chamber and is described in more detail below.

The compressor 14 is coupled to the silencer 22 by a first pipe 34; a second pipe 32 couples the silencer 22 to the rear valve block 16. The rear valve block 16 is coupled to the pneumatic spring of the fourth wheel 13d by a third pipe 28. The rear valve block 16 is coupled to the front valve block 18 by a fourth pipe 28. The rear valve block 16 is coupled to the pneumatic spring of the third wheel 13c by a fifth pipe 36. The rear valve block 16 is coupled to the reservoir 20 by a sixth pipe 30. The front valve block 18 is coupled to the pneumatic spring of the first wheel 13a by a seventh pipe 24 and to the pneumatic spring of the second wheel 13b by an eighth pipe 25.

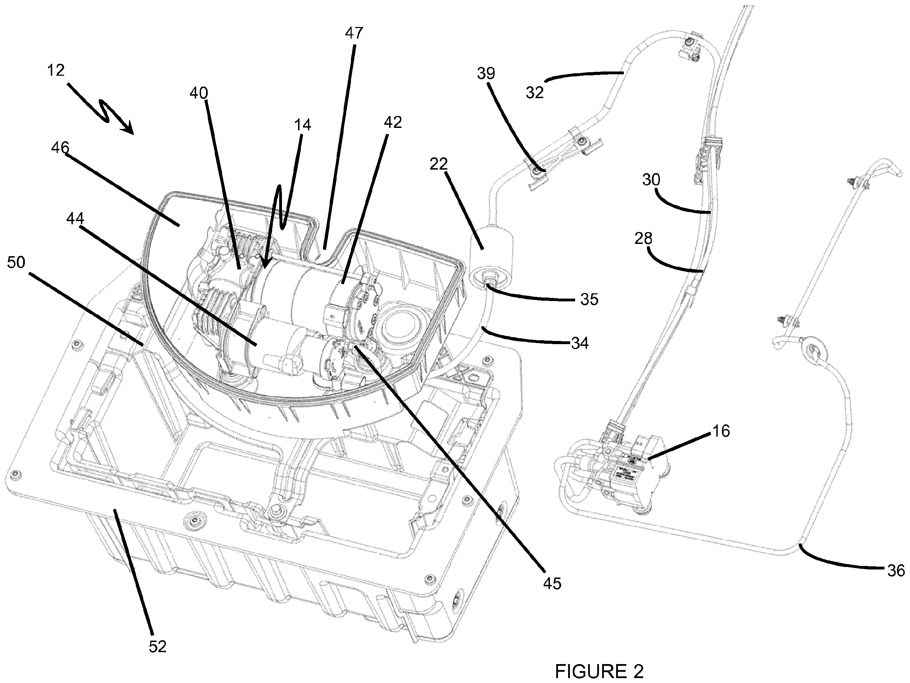

Figure 2 illustrates a portion of the suspension system 12, and shows the compressor 14 and silencer 22. The compressor 14 comprises a piston/cylinder arrangement 40 coupled to a drive means in the form of an electric motor 42, a crank or other suitable mechanism may be employed to convert the rotary motion of the motor 42 into linear motion of the piston. The piston/cylinder arrangement 40 is arranged to provide a two-stage compression of the air in the cylinder; the piston is moved in first direction to compress the air in a first stage, the compressed air is forced from a first end of the cylinder to a second opposing end of the cylinder, this compressed air is then compressed again in a second stage at the second end by moving the piston in the opposing direction.

The compressed air then passes through a drying station 44 in which moisture is removed from the compressed air, the drying station 44 comprises chamber including drying agent such as silica gel.

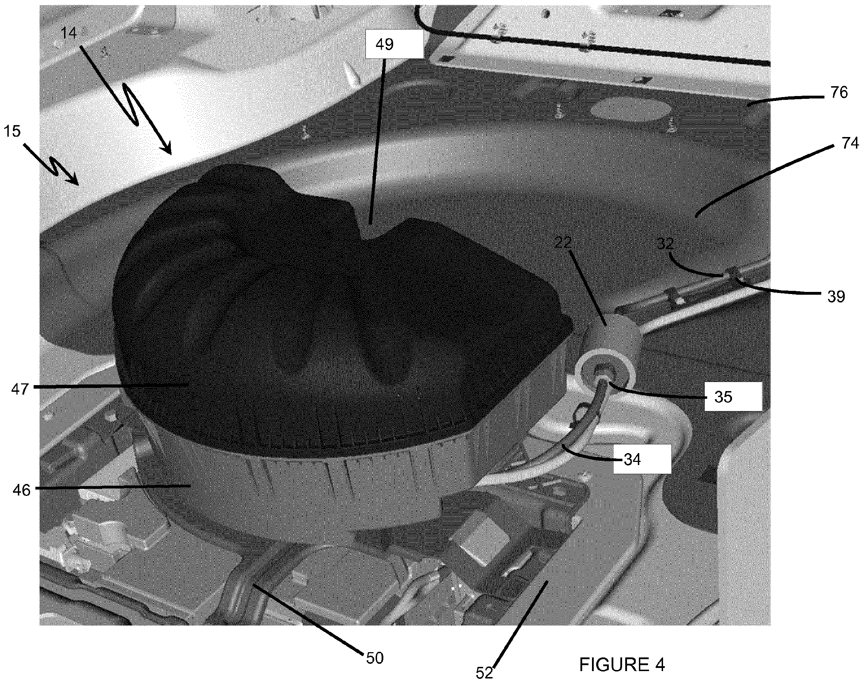

The compressor 14 is mounted within a housing 46/47 best shown in Figure 4; in Figure 2 an upper portion or lid 47 of the housing 46/47 has been removed for illustrative purposes. The housing 46 is mounted to a bracket 50. The bracket 50 is coupled to an enclosure 52 including a void for receiving a vehicle battery (not shown); the bracket 50 includes fixing means in the form of a bolt or screw to fixedly attaching the bracket 50 to the enclosure. The bracket 50 also includes a hinge mechanism for hingedly attaching the bracket 50 (and hence the housing 46/47 in which the compressor 14 is disposed) to the enclosure 52. It is envisaged that the battery provided in the enclosure 52 may be employed solely to power the electric motor 42 of the compressor 14 or may power additional devices provided on the vehicle 10 such as, but not limited to, the starter motor and ignition system or an electric vehicle propulsion motor.

An outlet 45 of the drying station 44 is coupled to the first pipe 34 which passes through an aperture (not shown) in a wall of the housing 46/47. The first pipe 34 is connected to the silencer 22 by a connector 35. The first pipe 34 may be pushed into the connector 35 and sealed by an O-ring or other suitable device. In other embodiments other suitable connection means may be employed.

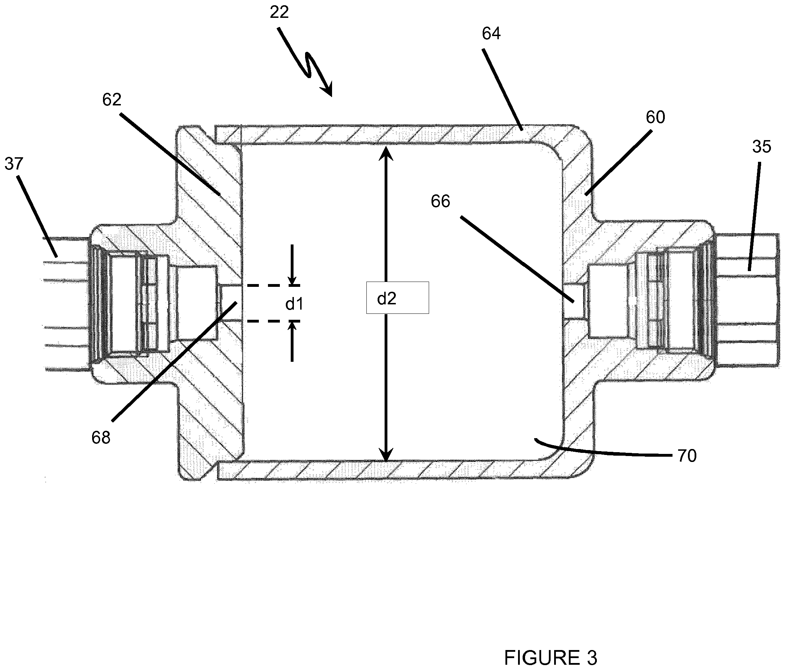

Referring now to Figure 3 the silencer 22 comprises a body having side walls 64 and end walls 60, 62 defining an expansion chamber 70. A first connector 35 is mounted in a first end wall 60; a second connector 37 is mounted in a second end wall 62. The first end wall 60 comprises an inlet aperture 66 arranged to allow compressed air, under pressure, to flow from the first pipe 34 into the expansion chamber 70 via the first connector 35. The second end wall 62 comprises an outlet aperture 68. In the illustrated embodiment the side walls 64 are formed by a cylinder although other tubular forms having alternative cross-sectional shapes are envisaged for example but not limited to, a square tube, rectangular tube, oval tube, hexagonal tube. In the illustrated embodiments the inlet pipe (first pipe 34) and the outlet pipe (second pipe 32) are mounted substantially concentrically, along the tubular axis, with respect to the expansion chamber 70, in other embodiments one or both of the inlet and outlet pipes may be mounted offset from the tubular axis; the inlet and outlet pipes may not be directly opposing one another. The inlet and/or outlet pipe may extend partially into the expansion chamber 70 beyond the respective end wall 60, 62 such that the inlet or outlet pipe terminates within the expansion chamber 70 rather than at the first or second end wall 60, 62 as shown in the illustrated embodiment. The compressed air exits the expansion chamber 70 through the outlet aperture 68 into the second pipe 32 via the second connector 37. The inlet aperture 66 and the outlet aperture 68 each have dimensions substantially equal to that of the inner cross sectional area of the respective one of the first or second pipes 34, 32. In the illustrated embodiment the first and second pipes 34, 32 have a circular cross section and the internal area is dependent upon the internal diameter d1. The second pipe 32 has the same dimensions as the first pipe 34.

The expansion chamber 70 provides a sudden change in cross sectional area of the conduit, at the first end wall 60 and at the second end wall 62. The inner cross sectional area of the expansion chamber 70 is selected to be greater than that of the inner cross sectional area of the first pipe 34, the change in cross sectional area reflects or dissipates a portion of the acoustic energy being transmitted in the first pipe 34.

The expansion chamber 70 forms a reactive or reflective silencer, the acoustic energy is reflected in the chamber at first end wall 60 and at the second wall 62. The attenuation or transmission loss of the acoustic energy is dependent upon the change in cross sectional area between the first pipe 34 and the expansion chamber 70; the maximum attenuation increases the larger the internal cross sectional area of the expansion chamber 70 is with respect to the internal cross sectional area of the first pipe 34 and/or second pipe 32. The attenuation or transmission loss of the acoustic energy is also dependent upon the length of the expansion chamber 70; maximum attenuation is achieved when the length of the expansion chamber 70 coincides with an odd multiple of a quarter of the wavelength of the noise being transmitted. In this way the silencer 22 can be optimised or tuned to filter specific noise frequencies. In some embodiments the length of the silencer 22 will be tuned to avoid setting up a standing wave or resonance within the frequency range of interest, or alternatively to ensure that any null in the attenuation or transmission loss occurs at a different frequency to the audible frequencies (fundamental frequency or harmonic frequencies) generated by the compressor 14.

The silencer 22 suppresses noise or acoustic energy from being transmitted along the pipe work 24, 26, 28, 30, 32, 34, 36 over a predefined acoustic spectrum or bandwidth. By suppressing the noise transmitted along or through the pipework 24, 26, 28, 30, 32, 34, 36 the noise which is radiated from or by the pipework 24, 26, 28, 30, 32, 34, 36 into the vehicle body 11 is reduced.

It will also be appreciated that the noise suppression means 22 reduces the amplitude of pressure variations or pulsations from being transmitted downstream of the expansion chamber 70. In particular the noise suppression means 22 reduces or suppress pressure variations, in particular pressure variations at frequencies higher than the fundamental frequency of the pressure pulsations. By suppressing the pressure pulsations in the pipework 24, 26, 28, 30, 32, 34, 36 the noise suppression means 22 acts to reduce vibrations in the walls of the pipework 24, 26, 28, 30, 32, 34, 36 which would otherwise occur whereby suppressing transmission of acoustic noise from the pipework 24, 26, 28, 30, 32, 34, 36 into the vehicle body 11 whether radiated into the volume defined by the vehicle body 11 or conducted into the structure of the vehicle body 11.

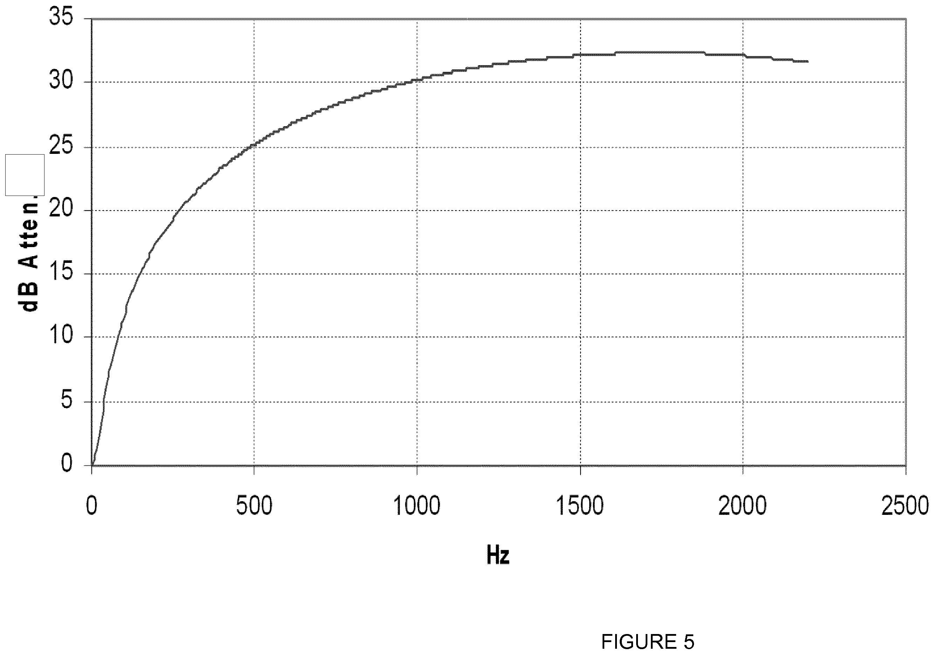

In one embodiment the pipework 24, 26, 28, 30, 32, 34, 36 had an internal diameter of 5.5mm, the internal diameter of the expansion chamber was 50mm and the length of the expansion chamber was 50mm. Figure 5 shows a simulation of the attenuation of the silencer 22 in the frequency range 0 to 2kHz, the simulation shows an attenuation of 20dB or more over the frequency range 250Hz to 2kHz. The simulation assumes that that the walls 60, 62, 64 of the silencer 22 are perfectly rigid and that the silencer is formed as a cylindrical expansion silencer having an internal diameter of 50mm, length of 50mm and concentric inlet and outlet apertures of internal diameter 5.5mm.

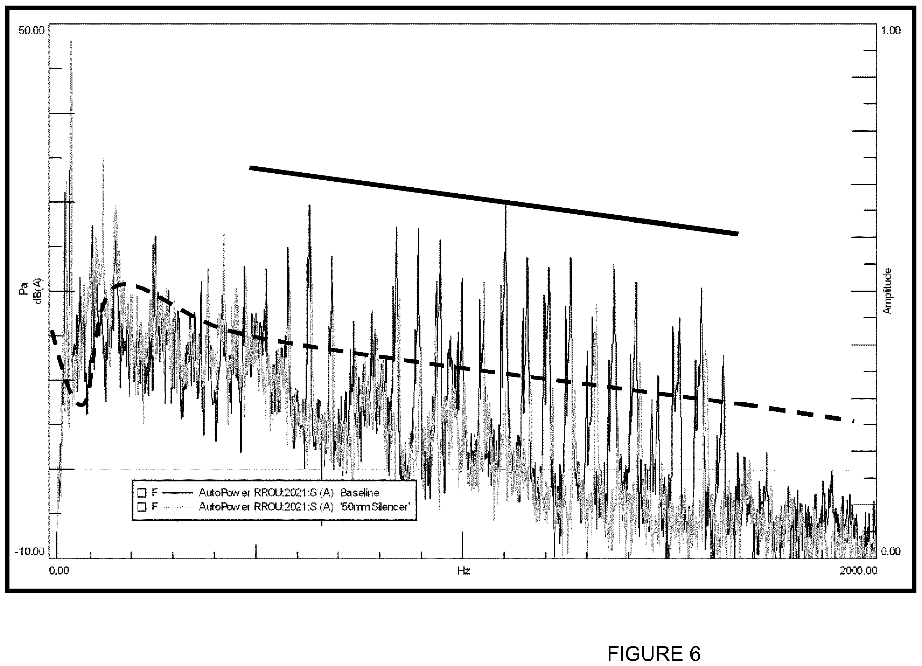

Figure 6 shows a comparison between a measurement of radiated noise against frequency in a vehicle cabin with and without a noise suppressor. The noise suppressor was constructed as a cylindrical expansion silencer constructed from Aluminium and having an internal diameter of 50mm, length of 50mm and concentric inlet and outlet apertures of internal diameter 5.5mm. Figure 6 illustrates that the silencer 22 achieved a 20dB attenuation of radiated noise in the vehicle body 11 from around 500Hz to 1600Hz. The solid line indicates the acoustic noise level within the vehicle cabin without employing a noise suppressor; the dashed line indicates the acoustic noise level within the vehicle cabin when a noise suppressor is fitted in the high pressure air-line.

Turning now to Figure 4 the compressor is covered by the housing 46/47, shown in position in the vehicle 10, the compressor 14 is disposed within a cargo space 15 and is mounted in a recess 74 in the floor 76 of the cargo space 15. The recess is adapted to receive a spare or emergency road wheel (not shown). The compressor housing 46/47 has been adapted and configured to be received within a void in the spare or emergency wheel; in this way the spare or emergency wheel is placed over the compressor housing 46/47 within the recess 74. The compressor housing 46/47 comprises a recess 49 for securing the spare or emergency wheel (not shown)The recess 49 is further provided with means such as a bolt for securing a spare wheel securely to the vehicle floor 76. The compressor housing 46/47 is substantially semi-circular or U-shaped. The lid portion 47 of the housing 46/47 is profiled, and comprises undulations which are arranged radially. It is envisaged that these undulations in the lid 47 may arranged accommodate spokes or other design features provided in the spare or emergency road wheel, this may facilitate alignment of the wheel with respect to the compressor housing 46/57 and/or increase the strength or rigidity of the lid portion 47.

It can be appreciated that various changes may be made within the scope of the present invention, for example, in other embodiments of the invention it is envisaged that the silencer 22 may be constructed of from alternative materials, having sufficient rigidity. In one embodiment the silencer 22 may be constructed of the same material as the pipework 24, 26, 28, 30, 32, 34, 36, for example the silencer 22 may be constructed from nylon. In some embodiments the silencer 22 may be integrally moulded with the pipework 24, 26, 28, 30, 32, 34, 36. In some embodiments the outer surface of the silencer 22 may comprise strengthening means in the form of ribs or other thickening of the walls to increase the rigidity of the expansion chamber 70. In other embodiments the silencer 22 may be mounted within the compressor housing 46/47. The silencer 22 may be coupled directly to the compressor outlet 45 or may be disposed between the drying station 44 and the piston/cylinder arrangement 42. In further embodiments of the invention the silencer 22 may comprise one or more baffles mounted within the expansion chamber. In some embodiments the silencer 22 may be integrated with the drying station 44 or the piston/cylinder arrangement 40. In yet other embodiments the silencer 22 may take a different form for example, but not limited to, a quarter wave resonator formed as a side branch or tube alongside the first pipe 34, or a Helmholtz resonator for example realised as a closed volume (such as a sphere) in communication with the first pipe 34 via throat.

## Claims

1. A compressor system for an air suspension system (12) of a vehicle (10), the system comprising:
a compressor (14) comprising a piston mounted within a cylinder, the cylinder having an inlet for receiving a fluid and an outlet coupleable to an outlet pipe (34) for transfer of a compressed fluid, the compressor (14) comprising a drive mechanism (42) for actuating the piston; and
the system being **characterised by** a noise suppressor (22) coupled to the outlet of the cylinder for reducing acoustic noise transmitted through the outlet pipe (34), wherein the noise suppressor (22) is spaced from the compressor (14), the outlet of the cylinder being coupled to an inlet of the noise suppressor (22) by the outlet pipe (34), wherein the noise suppressor (22) is integrally moulded with the outlet pipe (34).

2. A suspension system (12) for a vehicle (10) comprising a pneumatic actuator for adjusting the ride height of a vehicle (10), the pneumatic actuator being coupled to an output of a compressor (14) for compressing air to actuate the pneumatic actuator via a conduit (34) for transferring compressed air forming a pressurised path between the compressor (14) and the pneumatic actuator and wherein the system (12) comprises a noise suppressor (22) for reducing acoustic noise radiated from the conduit (34), the noise suppressor (22) being disposed in the pressurised path, wherein the noise suppressor (22) is spaced from the compressor (14), the output of the compressor (14) being coupled to an inlet aperture of the noise suppressor (22) by a first portion of the conduit (34), wherein the noise suppressor (22) is integrally moulded with the first portion of the conduit (34).

3. A suspension system (12) according to claim 2 wherein the noise suppressor (22) is a reactive or reflective silencer.

4. A suspension system (12) according to claim 2 or 3 wherein the noise suppressor (22) comprises an expansion chamber (70).

5. A suspension system (12) according to claim 4 wherein the expansion chamber (70) comprises a cylindrical tube having first and second end walls (60, 62), the first and second end walls (60, 62) each comprising an aperture (66, 68), the aperture (66) in the first end wall (60) forming the inlet aperture and the aperture (68) in the second end wall (62) forming an outlet aperture.

6. A suspension system (12) according to claim 5 wherein the outlet aperture (68) of the expansion chamber (70) is coupled to the pneumatic actuator by a second pipe (32).

7. A suspension system (12) according to claim 6 comprising a plurality of pneumatic actuators each coupled to the compressor (14) by one or more valves.

8. A suspension system (12) according to claim 7 comprising a pneumatic actuator coupling each road wheel (13a, 13b, 13c, 13d) of a vehicle (10) to a body (11) or chassis of the vehicle (10).

9. A suspension system (12) according to claim 2 wherein the compressor (14) is mounted within a volume defined by a vehicle body (11) and wherein the conduit (34) is disposed at least in part within the volume, the volume optionally including a passenger cabin of a vehicle (10).

10. A suspension system (12) according to claim 2 wherein the conduit (34) is disposed at least in part within a passenger cabin of a vehicle (10).

11. A suspension system (12) according to claim 2 wherein the compressor (14) is mounted within a housing (46, 47), and wherein the noise suppressor (22) is either disposed within the housing (46, 47) or is mounted externally of the housing (46, 47).

12. A suspension system (12) according to claim 2 wherein the compressor (14) is mounted within a cargo space (15) of a vehicle (10).

13. A suspension system (12) according to claim 2 wherein the compressor (14) is mounted within a housing (46, 47), the housing (46, 47) being disposed in a recess (74) for receiving a spare road wheel of the vehicle (10), wherein the housing (46, 47) is shaped so as to be accommodated within a recess of the spare road wheel of the vehicle (10).

14. A vehicle (10) comprising the compressor system of claim 1 or the suspension system (12) of any of claims 2 to 13.

## Patentansprüche

1. Kompressorsystem für ein Luftfederungssystem (12) eines Fahrzeugs (10), wobei das System umfasst:
einen Kompressor (14), der einen innerhalb eines Zylinders montierten Kolben umfasst, wobei der Zylinder einen Einlass zum Aufnehmen eines Fluids und einen mit einem Auslassrohr (34) koppelbaren Auslass zum Umsetzen eines komprimierten Fluids aufweist, wobei der Kompressor (14) einen Antriebsmechanismus (42) zum Betätigen des Kolbens umfasst; und
das System, das durch einen Geräuschunterdrücker (22) gekennzeichnet ist, der mit dem Auslass des Zylinders zum Reduzieren eines akustischen Geräuschs, das durch das Auslassrohr (34) übertragen wird, gekoppelt ist, wobei der Geräuschunterdrücker (22) von dem Kompressor (14) beabstandet ist, der Auslass des Zylinders mit einem Einlass des Geräuschunterdrückers (22) durch das Auslassrohr (34) gekoppelt ist, wobei der Geräuschunterdrücker (22) mit dem Auslassrohr (34) einstückig geformt ist.

2. Federungssystem (12) für ein Fahrzeug (10), das einen pneumatischen Aktuator zum Einstellen der Fahrhöhe eines Fahrzeugs (10) umfasst, wobei der pneumatische Aktuator mit einem Auslass eines Kompressors (14) zum Komprimieren von Luft gekoppelt ist, um den pneumatischen Aktuator über eine Leitung (34) zum Umsetzen von komprimierter Luft zu betätigen, die einen Druckweg zwischen dem Kompressor (14) und dem pneumatischen Aktuator ausbildet, und wobei das System (12) einen Geräuschunterdrücker (22) zum Reduzieren des von der Leitung (34) abgegebenen akustischen Geräuschs umfasst, wobei der Geräuschunterdrücker (22) in dem Druckweg eingerichtet ist, wobei der Geräuschunterdrücker (22) von dem Kompressor (14) beabstandet ist, der Auslass des Kompressors (14) mit einer Einlassöffnung des Geräuschunterdrückers (22) durch einen ersten Abschnitt der Leitung (34) gekoppelt ist, wobei der Geräuschunterdrücker (22) mit dem ersten Abschnitt der Leitung (34) einstückig geformt ist.

3. Federungssystem (12) nach Anspruch 2, wobei der Geräuschunterdrücker (22) ein Resonator- oder Reflektionsschalldämpfer ist.

4. Federungssystem (12) nach Anspruch 2 oder 3, wobei der Geräuschunterdrücker (22) eine Expansionskammer (70) umfasst.

5. Federungssystem (12) nach Anspruch 4, wobei die Expansionskammer (70) einen zylindrischen Schlauch umfasst, der eine erste und eine zweite Endwand (60, 62) aufweist, wobei die erste und die zweite Endwand (60, 62) jeweils eine Öffnung (66, 68) umfassen, wobei die Öffnung (66) in der ersten Endwand (60) die Einlassöffnung ausbildet und die Öffnung (68) in der zweiten Endwand (62) eine Auslassöffnung ausbildet.

6. Federungssystem (12) nach Anspruch 5, wobei die Austrittsöffnung (68) der Expansionskammer (70) mit dem pneumatischen Aktuator durch ein zweites Rohr (32) gekoppelt ist.

7. Federungssystem (12) nach Anspruch 6, das mehrere pneumatische Aktuatoren umfasst, die jeweils mit dem Kompressor (14) durch ein oder mehrere Ventile gekoppelt sind.

8. Federungssystem (12) nach Anspruch 7, das einen pneumatischen Aktuator umfasst, der jedes Laufrad (13a, 13b, 13c, 13d) eines Fahrzeugs (10) mit einer Karosserie (11) oder einem Fahrgestell des Fahrzeugs (10) koppelt.

9. Federungssystem (12) nach Anspruch 2, wobei der Kompressor (14) innerhalb eines Volumens montiert ist, das durch eine Fahrzeugkarosserie (11) definiert ist, und wobei die Leitung (34) wenigstens teilweise innerhalb des Volumens eingerichtet ist, wobei das Volumen optional einen Insassenfahrzeuginnenraum eines Fahrzeugs (10) einschließt.

10. Federungssystem (12) nach Anspruch 2, wobei die Leitung (34) wenigstens teilweise innerhalb eines Fahrzeuginnenraums eines Fahrzeugs (10) eingerichtet ist.

11. Federungssystem (12) nach Anspruch 2, wobei der Kompressor (14) innerhalb eines Gehäuses (46, 47) montiert ist und wobei der Geräuschunterdrücker (22) entweder innerhalb des Gehäuses (46, 47) eingerichtet ist oder außerhalb des Gehäuses (46, 47) montiert ist.

12. Federungssystem (12) nach Anspruch 2, wobei der Kompressor (14) innerhalb eines Laderaums (15) eines Fahrzeugs (10) montiert ist.

13. Federungssystem (12) nach Anspruch 2, wobei der Kompressor (14) innerhalb eines Gehäuses (46, 47) montiert ist, wobei das Gehäuse (46, 47) in einer Aussparung (74) zum Aufnehmen eines Ersatzlaufrads des Fahrzeugs (10) eingerichtet ist, wobei das Gehäuse (46, 47) geformt ist, um innerhalb einer Aussparung des Ersatzlaufrads des Fahrzeugs (10) zu fassen.

14. Fahrzeug (10), das das Kompressorsystem nach Anspruch 1 oder das Federungssystem (12) nach einem der Ansprüche 2 bis 13 umfasst.

## Revendications

1. Un système de compresseur pour un système de suspension pneumatique (12) d'un véhicule (10), le système comprenant :
un compresseur (14) comprenant un piston monté dans un cylindre, le cylindre ayant une entrée pour recevoir un fluide et une sortie pouvant être couplée à un tuyau de sortie (34) pour le transfert d'un fluide comprimé, le compresseur (14) comprenant un mécanisme d'entraînement (42) pour actionner le piston ; et
le système étant **caractérisé par** un suppresseur de bruit (22) couplé à la sortie du cylindre pour réduire le bruit acoustique transmis à travers le tuyau de sortie (34), dans lequel le suppresseur de bruit (22) est espacé du compresseur (14), la sortie du cylindre étant couplée à une entrée du suppresseur de bruit (22) par le tuyau de sortie (34), dans lequel le suppresseur de bruit (22) est moulé d'un seul tenant avec le tuyau de sortie (34).

2. Système de suspension (12) pour un véhicule (10) comprenant un actionneur pneumatique pour régler la hauteur de roulement d'un véhicule (10), l'actionneur pneumatique étant couplé à une sortie d'un compresseur (14) pour comprimer de l'air afin d'actionner l'actionneur pneumatique par l'intermédiaire d'un conduit (34) pour transférer de l'air comprimé formant un chemin pressurisé entre le compresseur (14) et l'actionneur pneumatique et dans lequel le système (12) comprend un suppresseur de bruit (22) pour réduire le bruit acoustique émis par le conduit (34), le suppresseur de bruit (22) étant disposé dans le chemin pressurisé, dans lequel le suppresseur de bruit (22) est espacé du compresseur (14), la sortie du compresseur (14) étant couplée à une ouverture d'entrée du suppresseur de bruit (22) par une première partie du conduit (34), dans lequel le suppresseur de bruit (22) est moulé intégralement avec la première partie du conduit (34).

3. Système de suspension (12) selon la revendication 2, dans lequel le suppresseur de bruit (22) est un silencieux réactif ou réfléchissant.

4. Système de suspension (12) selon la revendication 2 ou 3, dans lequel le suppresseur de bruit (22) comprend une chambre d'expansion (70).

5. Système de suspension (12) selon la revendication 4, dans lequel la chambre d'expansion (70) comprend un tube cylindrique ayant des première et seconde parois d'extrémité (60, 62), les première et seconde parois d'extrémité (60, 62) comprenant chacune une ouverture (66, 68), l'ouverture (66) dans la première paroi d'extrémité (60) formant l'ouverture d'entrée et l'ouverture (68) dans la seconde paroi d'extrémité (62) formant une ouverture de sortie.

6. Système de suspension (12) selon la revendication 5, dans lequel l'ouverture de sortie (68) de la chambre d'expansion (70) est couplée à l'actionneur pneumatique par un second tuyau (32).

7. Système de suspension (12) selon la revendication 6, comprenant une pluralité d'actionneurs pneumatiques, chacun étant couplé au compresseur (14) par une ou plusieurs valves.

8. Système de suspension (12) selon la revendication 7, comprenant un actionneur pneumatique couplant chaque roue (13a, 13b, 13c, 13d) d'un véhicule (10) à une carrosserie (11) ou au châssis du véhicule (10).

9. Système de suspension (12) selon la revendication 2, dans lequel le compresseur (14) est monté dans un volume défini par une carrosserie de véhicule (11) et dans lequel le conduit (34) est disposé au moins en partie dans le volume, le volume comprenant éventuellement une cabine de passagers d'un véhicule (10).

10. Système de suspension (12) selon la revendication 2, dans lequel le conduit (34) est disposé au moins en partie dans une cabine de passagers d'un véhicule (10).

11. Système de suspension (12) selon la revendication 2, dans lequel le compresseur (14) est monté dans un boîtier (46, 47), et dans lequel le suppresseur de bruit (22) est soit disposé dans le boîtier (46, 47), soit monté à l'extérieur du boîtier (46, 47).

12. Système de suspension (12) selon la revendication 2, dans lequel le compresseur (14) est monté dans un espace de chargement (15) d'un véhicule (10).

13. Système de suspension (12) selon la revendication 2, dans lequel le compresseur (14) est monté dans un logement (46, 47), le logement (46, 47) étant disposé dans un évidement (74) pour recevoir une roue de secours du véhicule (10), dans lequel le logement (46, 47) est formé de manière à être logé dans un évidement de la roue de secours du véhicule (10).

14. Un véhicule (10) comprenant le système de compresseur de la demande 1 ou le système de suspension (12) de l'une des demandes 2 à 13.
